# EUROPÄISCHE PATENTANMELDUNG

(11) **EP 4 631 761 A1**
(43) Veröffentlichungstag der Anmeldung: **15.10.2025**
(21) Anmeldenummer: 24168880.3
(22) Anmeldetag: 08.04.2024
(51) Int. Cl.: B60K 35/10, A01B 71/02, A01B 76/00

(54) **FERNBEDIENUNGSEINRICHTUNG FÜR EINEN LANDWIRTSCHAFTLICHEN TRAKTOR**

(71) Anmelder: Deere & Company, Moline, IL 61265 (US)
(72) Erfinder: SCHOTT, Florian, 68163 Mannheim (DE); HELLMANN, Dennis, 68163 Mannheim (DE); HAHN, Klaus, 68163 Mannheim (DE); STRICKER, Bjoern, 68163 Mannheim (DE); KANICHE, Onkar, 68163 Mannheim (DE)
(74) Vertreter: Dehnhardt, Florian Christopher

(57) **Zusammenfassung**

Es ist eine Fernbedienungseinrichtung (10) für einen landwirtschaftlichen Traktor (16) vorgesehen, die an einem Schmutzfänger (12) eines Hinterreifens (14) des landwirtschaftlichen Traktors (16) anbringbar ist und wenigstens ein von einem Bedienmodul (20) umfasstes Bedienelement (22, 24) zur manuellen Steuerung einer Traktor- oder Gerätefunktion aufweist. In das Bedienmodul (20) ist eine Auswahleinheit (26) integriert, über die sich eine von mehreren Traktor- oder Gerätefunktionen auswählen sowie dem wenigstens einen Bedienelement (22, 24) zum Zwecke der manuellen Steuerung zuordnen lässt.

## Beschreibung

Die Erfindung betrifft eine Fernbedienungseinrichtung für einen landwirtschaftlichen Traktor, die an einem Schmutzfänger eines Hinterreifens des landwirtschaftlichen Traktors anbringbar ist und wenigstens ein von einem Bedienmodul umfasstes Bedienelement zur manuellen Steuerung einer Traktor- oder Gerätefunktion aufweist.

Die üblicherweise in einem für einen Bediener mit der Hand gut zugänglichen heckseitigen Abschnitt des Schmutzfängers eingebaute Fernbedienungseinrichtung umfasst mehrere in einem Bedienmodul zusammengefasste Bedienelemente, von denen jedes der Steuerung einer bestimmten Traktor- oder Gerätefunktion dient. Hierzu gehört typischerweise das Heben und Senken eines Dreipunkt-Krafthebers oder das Ein- und Ausschalten einer Zapfwelle. Weiterhin können die Bedienelemente der Betätigung eines Steuerventilblocks (sog. SCV) dienen, der sich im Heckbereich des landwirtschaftlichen Traktors befindet und einen Betrieb von daran anschließbaren hydraulischen Aggregaten eines Anbau- oder Zusatzgeräts ermöglicht. Meist ist eine Vielzahl derartiger Steuerventilblöcke vorhanden, wobei die Zuordnung der Bedienelemente zu einem bestimmten Steuerventilblock entweder fest vorgegeben oder aber über eine in der Fahrerkabine vorgesehene Bedienerschnittstelle veränderbar ist. Dies führt entweder zu einer Einschränkung der Flexibilität der bekannten Fernbedienungseinrichtung oder macht deren nachträgliche Konfiguration umständlich.

Aufgabe der vorliegenden Erfindung ist es daher, eine Fernbedienungseinrichtung der eingangs genannten Art hinsichtlich ihrer Nutzerfreundlichkeit zu verbessern.

Diese Aufgabe wird durch eine Fernbedienungseinrichtung für einen landwirtschaftlichen Traktor mit den Merkmalen des Patentanspruchs 1 gelöst.

Demgemäß ist eine Fernbedienungseinrichtung für einen landwirtschaftlichen Traktor vorgesehen, die an einem Schmutzfänger eines Hinterreifens des landwirtschaftlichen Traktors anbringbar ist und wenigstens ein von einem Bedienmodul umfasstes Bedienelement zur manuellen Steuerung einer Traktor- oder Gerätefunktion aufweist. In das Bedienmodul ist eine Auswahleinheit integriert, über die sich eine von mehreren Traktor- oder Gerätefunktionen auswählen sowie dem wenigstens einen Bedienelement zum Zwecke der manuellen Steuerung zuordnen lässt.

Die Integration der Auswahleinheit in das Bedienmodul ist baulich zu verstehen, diese befindet sich in unmittelbarer Griffnähe zu dem wenigstens einen Bedienelement. Die Auswahleinheit erlaubt daher nicht nur eine flexible Funktionszuordnung zu dem wenigstens einen Bedienelement, diese ist zudem auch besonders komfortabel änderbar, da der Fahrer insbesondere nicht genötigt ist, hierfür eigens eine in der Fahrerkabine vorgesehene Bedienerschnittstelle aufzusuchen. All dies erfolgt besonders nutzerfreundlich über ein und dasselbe Bedienmodul.

Die Fernbedienungseinrichtung kann in an sich bekannter Weise in einem für einen Bediener mit der Hand gut zugänglichen heckseitigen Abschnitt des Schmutzfängers eingebaut sein. Das wenigstens eine Bedienelement kann der Betätigung eines von mehreren Steuerventilblöcken (sog. SCVs) dienen, die sich im Heckbereich des landwirtschaftlichen Traktors befinden und einen Betrieb von daran anschließbaren hydraulischen Aggregaten eines Anbau- oder Zusatzgeräts ermöglichen. Ungeachtet dessen kann es sich jedoch auch um universelle, also nicht anwendungsspezifische Funktionen handeln. So können diese zum Beispiel auch die Steuerung einer Arbeits- oder Umfeldbeleuchtung des landwirtschaftlichen Traktors, eines hydraulisch betätigbaren Dreipunkt-Krafthebers oder einer Zapfwelle betreffen. Auch kann eine ISOBUS-Schnittstelle zur elektrischen Steuerung von Funktionen eines an dem landwirtschaftlichen Traktor anbringbaren Anbau- oder Zusatzgeräts vorgesehen sein.

Das wenigstens eine Bedienelement ist typischerweise als robuster Drucktaster ausgebildet, der mittels einer darüber angebrachten Gummikappe vor eindringendem Wasser und Schmutz geschützt ist.

Vorteilhafte Weiterbildungen der erfindungsgemäßen Fernbedienungseinrichtung gehen aus den Unteransprüchen hervor.

Vorzugsweise handelt es sich bei der Auswahleinheit um einen elektromechanischen Drehschalter mit mehreren Schaltstellungen, wobei jeder der Schaltstellungen eine dem wenigstens einen Bedienelement zuordenbare Traktor- oder Gerätefunktion entspricht. Die einzelnen Schaltstellungen können hierbei mit Symbolen und/oder Beschriftungen zur Kennzeichnung der betreffenden Traktor- oder Gerätefunktion versehen sein.

Weiterhin ist es denkbar, dass die Auswahleinheit eine Vielzahl von Tastenelementen umfasst, wobei über jedes der Tastenelemente eine dem wenigstens einen Bedienelement zuordenbare Traktor- oder Gerätefunktion auswählbar ist. Die Tastenelemente sind beispielsweise in Gestalt eines Drucktastenfelds übereinander und/oder nebeneinander angeordnet. Zusätzlich können diese mit die jeweiligen Traktor- oder Gerätefunktionen kennzeichnenden Symbolen und/oder Beschriftungen versehen sein, wobei mittels einer in das jeweilige Tastenelement eingebauten Leuchtdiode dem Bediener signalisiert bzw. rückgemeldet wird, ob die betreffende Traktor- oder Gerätefunktion gerade ausgewählt und damit über das wenigstens eine Bedienelement steuerbar ist.

Andererseits kann die Auswahleinheit auch ein einzelnes Tastenelement umfassen, wobei durch wiederholtes Betätigen ("Skippen") des einzelnen Tastenelements aus einer Vielzahl von zur Verfügung stehenden Traktor- oder Gerätefunktionen eine dem wenigstens einen Bedienelement zuordenbare Traktor- oder Gerätefunktion auswählbar ist. Das einzelne Tastenelement kann auch hier als Drucktaster ausgebildet sein.

In einem solchen Fall ist es von Vorteil, wenn in das Bedienmodul eine Informationsausgabeeinheit zur Anzeige der dem wenigstens einen Bedienelement aktuell zugeordneten Traktor- oder Gerätefunktion integriert ist. Bei der Informationsausgabeeinheit kann es sich um ein Display zur Darstellung entsprechender Klartextinformationen handeln. Im einfachsten Fall ist die Informationsausgabeeinheit als Leuchtdiodenfeld ausgebildet, wobei neben jeder der Leuchtdioden ein zur Kennzeichnung der zugehörigen Traktor- oder Gerätefunktion vorgesehenes Symbol und/oder eine entsprechende Beschriftung angebracht ist. Die Informationsausgabeeinheit ist mitsamt einer Anzeigesteuerung in das Bedienmodul eingebaut und über einen CAN-Datenbus in die Steuergerätearchitektur des landwirtschaftlichen Traktors eingebunden.

Die erfindungsgemäße Fernbedienungseinrichtung wird im Folgenden anhand der beigefügten Zeichnungen näher erläutert. Dabei sind übereinstimmende bzw. bezüglich ihrer Funktion vergleichbare Komponenten mit identischen Bezugszeichen gekennzeichnet. Es zeigen:
- Fig. 1: ein erstes Ausführungsbeispiel der erfindungsgemäßen Fernbedienungseinrichtung für einen landwirtschaftlichen Traktor,
- Fig. 2: ein zweites Ausführungsbeispiel der erfindungsgemäßen Fernbedienungseinrichtung für einen landwirtschaftlichen Traktor, und
- Fig. 3: ein drittes Ausführungsbeispiel der erfindungsgemäßen Fernbedienungseinrichtung für einen landwirtschaftlichen Traktor.

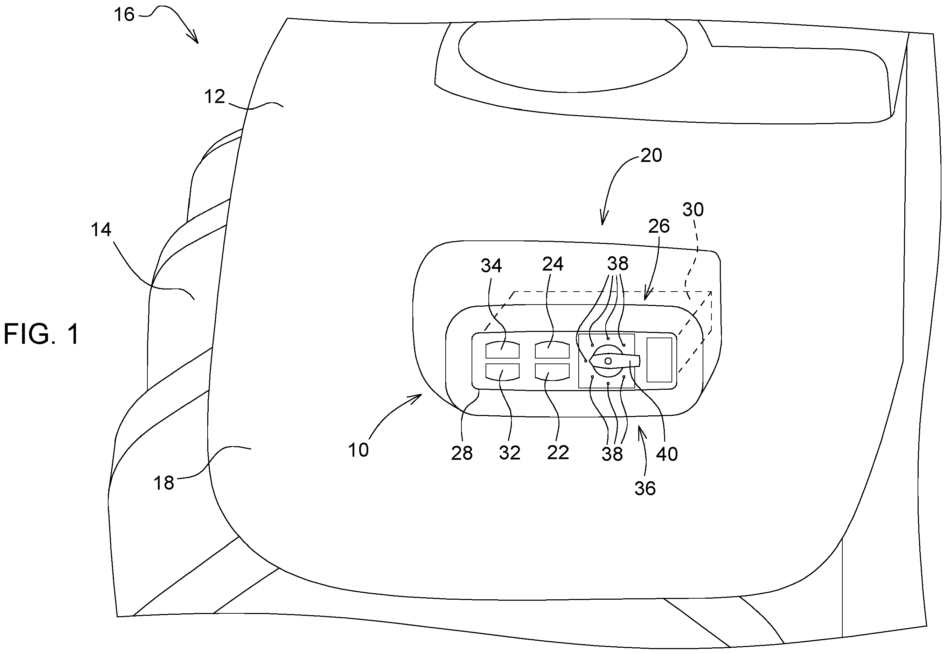

Fig. 1 zeigt ein erstes Ausführungsbeispiel der erfindungsgemäßen Fernbedienungseinrichtung für einen landwirtschaftlichen Traktor.

Demgemäß ist die Fernbedienungseinrichtung 10 an einem Schmutzfänger 12 eines Hinterreifens 14 des landwirtschaftlichen Traktors 16 angebracht. Genauer gesagt ist die Fernbedienungseinrichtung 10 in einem für einen Bediener mit der Hand gut zugänglichen heckseitigen Abschnitt 18 des Schmutzfängers 12 eingebaut und weist von einem Bedienmodul 20 umfasste erste und zweite Bedienelement 22, 24 zur manuellen Steuerung einer Traktor- oder Gerätefunktion auf, die sich über eine in das Bedienmodul 20 integrierte Auswahleinheit 26 aus einer von mehreren Traktor- oder Gerätefunktionen auswählen sowie dem ersten bzw. zweiten Bedienelement 22, 24 zum Zwecke der manuellen Steuerung zuordnen lassen.

Aufgrund der Darstellung des Bedienmoduls 20 in eingebautem Zustand ist lediglich eine Frontplatte 28 sichtbar, nicht jedoch ein sich daran rückwärtig anschließendes Modulgehäuse 30, das in Fig. 1 strichliniert angedeutet ist. In dem Bedienmodul 20 sind neben dem ersten und zweiten Bedienelement 22, 24 weitere Bedienelemente 32, 34 zusammengefasst. Letztere dienen der Steuerung einer fest zugeordneten Traktor- oder Gerätefunktion, beispielgemäß dem Heben und Senken eines Dreipunkt-Krafthebers.

Bei der Auswahleinheit 26 handelt im Falle des in Fig. 1 wiedergegebenen ersten Ausführungsbeispiels der Fernbedienungseinrichtung 10 um einen elektromechanischen Drehschalter 36 mit mehreren Schaltstellungen 38. Der Drehschalter 36 weist einen Drehknopf 40 auf, mittels dessen ein Bediener manuell zwischen den verschiedenen Schaltstellungen 38 wechseln kann. Jeder der Schaltstellungen 38 entspricht eine dem ersten und zweiten Bedienelement 22, 24 zuordenbare Traktor- oder Gerätefunktion. Die einzelnen Schaltstellungen 38 sind mit Symbolen und/oder Beschriftungen zur Kennzeichnung der betreffenden Traktor- oder Gerätefunktion versehen.

Beispielsgemäß dient das erste bzw. zweite Bedienelement 22, 24 der Betätigung eines vom mehreren nicht dargestellten Steuerventilblöcken (sog. SCVs), die sich im Heckbereich des landwirtschaftlichen Traktors 16 befinden und einen Betrieb von daran über zugehörige Hydraulikkuppler anschließbaren hydraulischen Aggregaten eines Anbau- oder Zusatzgeräts ermöglichen. Je nachdem, ob das erste oder zweite Bedienelement 22, 24 vom Bediener betätigt wird, lässt sich die Richtung eines an den Hydraulikkupplern auftretenden Hydraulikflusses verändern.

Die Integration der Auswahleinheit 26 in das Bedienmodul 20 ist baulich zu verstehen, diese befindet sich erkennbar in unmittelbarer Griffnähe zu dem ersten bzw. zweiten Bedienelement 22, 24.

Der Vollständigkeit halber sei angemerkt, dass die Darstellung von lediglich zwei über die Auswahleinheit 26 bezüglich ihrer Funktionszuordnung konfigurierbaren Bedienelementen 22, 24 beispielhaft zu verstehen ist, je nach zu steuernder Traktor- oder Gerätefunktion kann sich auch um eine beliebige andere Anzahl handeln.

Die in Fig. 1 dargestellten Bedienelemente 22, 24, 32, 34 sind sämtlich als robuste Drucktaster ausgebildet, die mittels einer jeweils darüber angebrachten Gummikappe vor eindringendem Wasser und Schmutz geschützt sind.

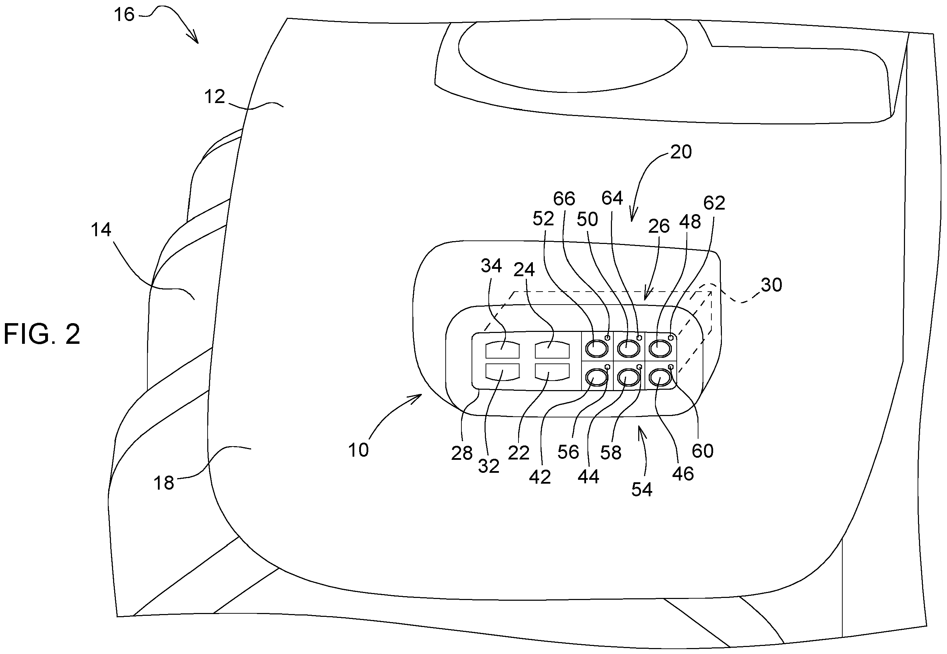

Fig. 2 zeigt ein zweites Ausführungsbeispiel der erfindungsgemäßen Fernbedienungseinrichtung für einen landwirtschaftlichen Traktor.

Dieses unterscheidet sich von dem ersten Ausführungsbeispiel der Fernbedienungseinrichtung 10 hinsichtlich der Ausgestaltung der Auswahleinheit 26, die hier anstelle eines elektromechanischen Drehschalters 36 eine Vielzahl von Tastenelementen 42, 44, 46, 48, 50, 52 umfasst. Über jedes der Tastenelemente 42, 44, 46, 48, 50, 52 ist eine dem ersten bzw. zweiten Bedienelement 22, 24 zuordenbare Traktor- oder Gerätefunktion auswählbar. Hier betrifft diese neben der Betätigung eines von mehreren Steuerventilblöcken weiterhin universelle, also nicht anwendungsspezifische Funktionen, zum Beispiel die Steuerung einer Arbeits- oder Umfeldbeleuchtung des landwirtschaftlichen Traktors 16, eines hydraulisch betätigbaren Dreipunkt-Krafthebers oder einer Zapfwelle. Auch kann eine ISOBUS-Schnittstelle zur elektrischen Steuerung von Funktionen eines an dem landwirtschaftlichen Traktor 16 anbringbaren Anbau- oder Zusatzgeräts vorgesehen sein.

Die Tastenelemente 42, 44, 46, 48, 50, 52 sind in Gestalt eines von einer gemeinsamen Gummikappe geschützten Drucktastenfelds 54 matrixartig übereinander und/oder nebeneinander angeordnet. Zusätzlich sind diese mit die jeweiligen Traktor- oder Gerätefunktionen kennzeichnenden Symbolen und/oder Beschriftungen versehen, wobei mittels einer in das jeweilige Tastenelement 42, 44, 46, 48, 50, 52 eingebauten Leuchtdiode 56, 58, 60, 62, 64, 66 dem Bediener signalisiert bzw. rückgemeldet wird, ob die betreffende Traktor- oder Gerätefunktion gerade ausgewählt und damit über das erste bzw. zweite Bedienelement 22, 24 steuerbar ist.

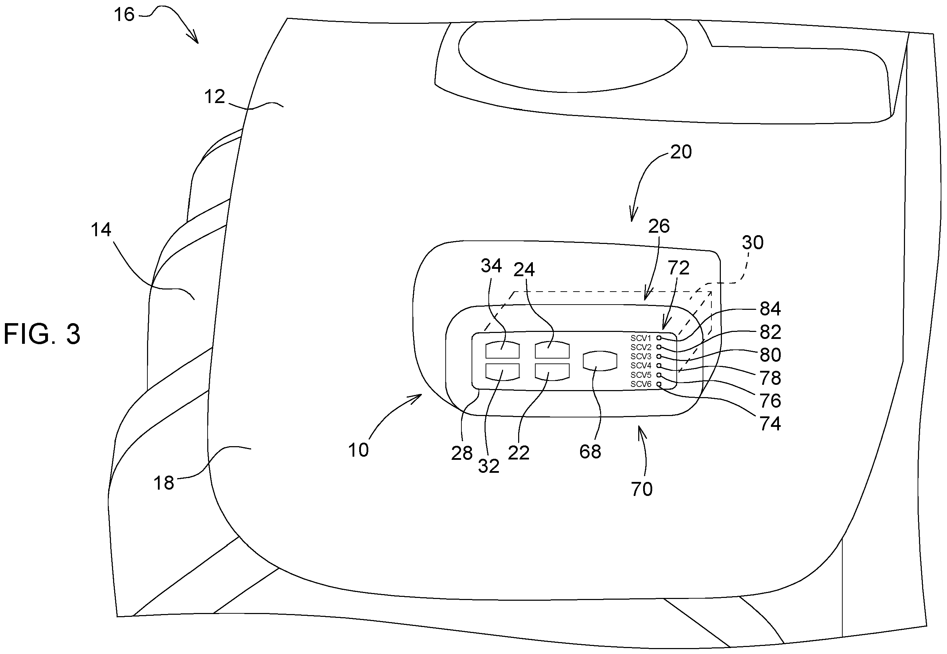

Fig. 3 zeigt ein drittes Ausführungsbeispiel der erfindungsgemäßen Fernbedienungseinrichtung für einen landwirtschaftlichen Traktor.

Hier zeichnet sich die Fernbedienungseinrichtung 10 dadurch aus, dass die Auswahleinheit 26 ein einzelnes Tastenelement 68 umfasst, wobei durch wiederholtes Betätigen des einzelnen Tastenelements 68 aus einer Vielzahl von zur Verfügung stehenden Traktor- oder Gerätefunktionen eine dem ersten bzw. zweiten Bedienelement 22, 24 zuordenbare Traktor- oder Gerätefunktion auswählbar ist. Das einzelne Tastenelement 68 ist auch hier als Drucktaster ausgebildet.

Ferner ist in das Bedienmodul 20 eine Informationsausgabeeinheit 68 zur Anzeige der dem ersten bzw. zweiten Bedienelement 22, 24 aktuell zugeordneten Traktor- oder Gerätefunktion integriert. Die Informationsausgabeeinheit 70 ist als Leuchtdiodenfeld 70 mit übereinander angeordneten Leuchtdioden 74, 76, 78, 80, 82, 84 ausgebildet, wobei neben jeder der Leuchtdioden 74, 76, 78, 80, 82, 84 ein zur Kennzeichnung der zugehörigen Traktor- oder Gerätefunktion (betreffend einen von insgesamt sechs Steuerventilblöcken) vorgesehenes Symbol und/oder eine entsprechende Beschriftung angebracht ist. Die Informationsausgabeeinheit 70 ist mitsamt einer Anzeigesteuerung in das Bedienmodul 20 eingebaut und über einen CAN-Datenbus in die Steuergerätearchitektur des landwirtschaftlichen Traktors 16 eingebunden (nicht gezeigt).

## Patentansprüche

1. Fernbedienungseinrichtung für einen landwirtschaftlichen Traktor, die an einem Schmutzfänger (12) eines Hinterreifens (14) des landwirtschaftlichen Traktors (16) anbringbar ist und wenigstens ein von einem Bedienmodul (20) umfasstes Bedienelement (22, 24) zur manuellen Steuerung einer Traktor- oder Gerätefunktion aufweist, **dadurch gekennzeichnet, dass** in das Bedienmodul (20) eine Auswahleinheit (26) integriert ist, über die sich eine von mehreren Traktor- oder Gerätefunktionen auswählen sowie dem wenigstens einen Bedienelement (22, 24) zum Zwecke der manuellen Steuerung zuordnen lässt.

2. Fernbedienungseinrichtung nach Anspruch 1, **dadurch gekennzeichnet, dass** es sich bei der Auswahleinheit (26) um einen elektromechanischen Drehschalter (36) mit mehreren Schaltstellungen (38) handelt, wobei jeder der Schaltstellungen (38) eine dem wenigstens einen Bedienelement (22, 24) zuordenbare Traktor- oder Gerätefunktion entspricht.

3. Fernbedienungseinrichtung nach Anspruch 1 oder 2, **dadurch gekennzeichnet, dass** die Auswahleinheit (26) eine Vielzahl von Tastenelementen (42, 44, 46, 48, 50, 52) umfasst, wobei über jedes der Tastenelemente (42, 44, 46, 48, 50, 52) eine dem wenigstens einen Bedienelement (22, 24) zuordenbare Traktor- oder Gerätefunktion auswählbar ist.

4. Fernbedienungseinrichtung nach wenigstens einem der vorhergehenden Ansprüche, **dadurch gekennzeichnet, dass** die Auswahleinheit (26) ein einzelnes Tastenelement (68) umfasst, wobei durch wiederholtes Betätigen des einzelnen Tastenelements (68) aus einer Vielzahl von zur Verfügung stehenden Traktor- oder Gerätefunktionen eine dem wenigstens einen Bedienelement (22, 24) zuordenbare Traktor- oder Gerätefunktion auswählbar ist.

5. Fernbedienungseinrichtung nach wenigstens einem der vorhergehenden Ansprüche, **dadurch gekennzeichnet, dass** in das Bedienmodul (20) eine Informationsausgabeeinheit (70) zur Anzeige der dem wenigstens einen Bedienelement (22, 24) aktuell zugeordneten Traktor- oder Gerätefunktion integriert ist.
